# EUROPÄISCHE PATENTSCHRIFT

(11) **EP 1 656 056 B1**
(45) Veröffentlichungstag und Bekanntmachung des Hinweises auf die Patenterteilung: **31.01.2007**
(21) Anmeldenummer: 04741096.4
(22) Anmeldetag: 16.07.2004
(51) Int. Cl.: A47J 19/02

(54) **SAFTPRESSE MIT ANGESTELLTEN TRESTERFINGERN**
JUICE PRESS WITH POMACE FINGERS PLACED THEREON
PRESSE-FRUITS SUR LEQUEL SONT DISPOSES DES DOIGTS A PULPE

(30) Priorität: 11.08.2003 DE 10336822
(43) Veröffentlichungstag der Anmeldung: 17.05.2006
(73) Patentinhaber: BSH Bosch und Siemens Hausgeräte GmbH, 81739 München (DE)
(72) Erfinder: BREZOVNIK, Peter, 3330 Mozirje (SI); PAVLOVIC, Henrik, Ljubno ob Savin 3333 (SI); ZIBRET, Igor, 3327 Smartno ob Paki (SI)
(86) Internationale Anmeldenummer: PCT/EP2004/007968
(87) Internationale Veröffentlichungsnummer: WO 2005/016088

(56) Entgegenhaltungen:
- EP-A- 0 423 457
- DE-A- 3 923 865
- US-A- 4 080 885
- US-A- 4 744 522
- US-A- 6 138 556

## Beschreibung

Die Erfindung betrifft eine Saftpresse gemäß dem Oberbegriff des Anspruchs 1.

Aus EP 423 457 B1 ist eine elektrische Zitruspresse mit einem Sieb bekannt, das einen kreisförmigen Rand aufweist, der in geringem Abstand zur Mantelfläche eines Presskegels verläuft. Die Mantelfläche verläuft in diesem Bereich konisch. Zwischen Sieb und Presskegel wird ein Ringspalt gebildet, durch den Tresterpartikel in eine Auffangschale übertreten können. An den Rand schließen sich radial nach außen verlaufende Durchlässe an, die zur einfachen Reinigung des Siebes und der Durchlässe zum Ringspalt hin offen sind. Geringfügig oberhalb der Mantelfläche sind am Presskegel radial hervorspringende Abstreifer angeformt, die im wesentlichen die Aufgabe haben, kleinere Tresterstücke durch die Durchlässe durchzudrücken. Gröbere Tresterstücke werden von den Abstreifern radial nach außen geschoben, wo sie dort liegen bleiben.

Aus US-4080885 ist eine weitere Saftpresse bekannt.

Aufgabe der Erfindung ist es, eine Saftpresse zu schaffen bei der die Presswirkung der Tresterfinger verbessert ist.

Diese Aufgabe wird erfindungsgemäß dadurch gelöst, dass die der Siebfläche zugewandte Seitenflächt des Tresterfingers in Drehrichtung des Presskegels gegenüber der Siebflächt austeigt. Dadurch werden weniger Tresteranteile radial nach außen geschoben und mehr Tresteranteile werden durch die Durchlässe hindurch in den ausgepressten Saft gedrückt, so gelangen mehr Tresteranteil in den Saft. Gleichzeitig wird aufgrund der Keilwirkung der angestellten Tresterfinger die Tresteranteile zusätzlich gequetscht und mehr Saft aus den Tresteranteilen herausgequetscht, die zu grob sind, um über die Durchlässe des Siebes in den Saft zu gelangen.

In einer bevorzugten Ausgestaltung der Erfindung steigt die der Siebfläche zugewandte Seitenfläche des Tresterfingers in radialer Richtung gegenüber der Siebfläche nach außen an. So können Tresteranteile von einem radial äußeren Bereich radial nach innen gleiten du unter die Tresterfinger in Richtung auf die Mitte des Presskegels hin zwischen Presskegel und Sieb gefördert werden.

Vorzugsweise steigt die der Siebfläche zugewandte Seitenfläche des Tresterfingers in Drehrichtung des Presskegels gegenüber der Siebfläche an. Die aufgrund der Drehung des Presskegel über die Siebfläche gleitenden Tresterfinger wird der auf dem Sieb liegengebliebene Tresteranteil in den keilförmigen Spalt zwischen Tresterfinger und Sieb geschoben und unter dem Tresterfinger verdichtet. So werden kleinere Tresteranteile durch die Schlitze des Siebes hindurch gepresst und große Tresteranteile, die nicht über die Schlitze in den ausgepressten Saft gelangen können, werden zusätzlich ausgequetscht, so dass zusätzlicher Saft aus den groben Tresteranteilen in den ausgepressten Saft gelangen können.

Die der Siebfläche zugewandte Seitenfläche des Tresterfingers kann einen nach außen gewölbten Flächenabschnitt aufweisen. Aufgrund der Wölbung werden axial auf den Preskegel einwirkende Druckkräfte punktueller auf die Tresteranteile auf dem Sieb übertragen, als dies bei flachen Tresterfingern der Fall wäre. Durch die größere Kraft, die auf eine kleinere Fläche einwirkt, werden die Tresteranteile besonders wirksam zusammen gequetscht.

In vorteilhafter Weise kann der mindestens eine Tresterfinger einen von dem Siebkörper weggebogenen Randabschnitt aufweisen. Alternativ oder ergänzend zu einem gewölbten Flächenabschnitt am Tresterfinger, kann ein gesonderter weggebogener Radabschnitt vorgesehen sein, der gegenüber dem Sieb angestellt ist und somit den Keilspalt bildet. Die dem Sieb zugewandte Seitenfläche des Tresterfingers kann also entweder vollständig gewölbt gebogen sein, oder ein zentraler Flächenabschnitt der Seitenfläche ist gewolbt und die Randabschnitte in einem Winkel angestellt eben ausgebildet, oder der zentraler Flächenabschnitt der Seitenfläche ist eben ausgebildet und die Randabschnitte in einem Winkel angestellt eben ausgebildet.

Der weggebogene Randabschnitt kann durch einen radial freien Endabschnitt des Tresterfingers gebildet werden. Vorzugsweise ist der weggebogene Randabschnitt in Drehrichtung des Presskegels einem dem Siebkörper zugewandten Flächenabschnitt des Tresterfingers vorgelagert ist.

Die Siebfläche kann zumindest in dem von dem mindestens einen Tresterfinger überstrichenen, saftdurchlässigen Bereich radial nach außen ansteigend ausgebildet sein. Die Siebfläche bildet dabei einen steil abfallenden Randbereich aus. Am radial äußeren Umfang der Siebfläche angelagerter Trester wird aufgrund der Schwerkraft und des steil abfallenden Randbereichs der Siebfläche wieder radial nach innen zwischen Presskegel und Siebfläche hineingeführt. So gelangen radial nach außen abgewiesene Tresteranteil immer wieder unter den Presskegel und werden dort mehrfach gequetscht, wodurch besonders viel Saft aus den Tresteranteilen ausgepresst wird.

Vorzugsweise ist der nach außen ansteigende saftdurchlässige Bereich des Siebkörpers schalenartig gewölbt. Der schalenartig gewölbte saftdurchlässige Bereich des Siebes kann parallel beabstandet zu dem nach außen gewölbten Flächenabschnitt des mindestens eine Tresterfingers verlaufend ausgebildet sein. So wird ein besonders enger Spalt zwischen Tresterfinger und Siebfläche geschaffen, in dem die Tresteranteile stark gepresst werden, wodurch die Saftausbeute verbessert ist.

Der nach außen ansteigende saftdurchlässige Bereich der Siebfläche kann sich radial mindestens über die von dem mindestens einen Tresterfinger überstrichene Fläche erstrecken. So wird die pressende und quetschende Wirkung der Tresterfinger besonders gut genutzt, da die gesamte der Siebfläche zugewandte Seitenfläche der Tresterfinger für das Auspressen der Tresteranteile genutzt werden kann.

Vorzugsweise wird der saftdurchlässige Bereich durch eine Vielzahl von in der Siebfläche sich radial erstreckenden Schlitzen gebildet. Zur Erhöhung der pressenden und quetschenden Wirkung können eine Vielzahl von Tresterfingern am Presskegel vorgesehen sein. Es hat sich als besonders vorteilhaft gezeigt, wenn drei gleichmäßig über den Umfang verteilter Tresterfinger benützt werden.

Die Schlitze können von einer innerhalb des von der Grundrissfläche des Presskegels überdeckten Siebfläche ausgehen und sich nach außen hin mindestens bis zu einem radialen Ende des mindestens einen Tresterfingers erstrecken. Es können eine Vielzahl von radial erstreckenden Schlitzen in der Siebfläche vorgesehen sein. Es kann jedoch beispielsweise auch ein einziger Schlitz vorgesehen sein, der sich spiralförmig von außen nach innen oder von innen nach außen in der Siebfläche verläuft.

Eine bevorzugte Ausgestaltung der Erfindung ist im folgenden anhand der Figuren 1 bis 11 näher erläutert.

Es zeigen:
- Figur 1: einen Querschnitt durch eine erfindungsgemäße Saftpresse;
- Figur 2: eine Schnittdarstellung durch ein oberes Sieb mit einem aufgesetzten Presskegel in Seitenansicht;
- Figur 3: eine perspektivische Ansicht des oberen Siebes gemäß Figur 2 mit dem aufgesetzten Presskegel im Teilschnitt;
- Figur 4: eine Schnittdarstellung durch das obere Sieb und den Presskegel gemäß Figur 2;
- Figur 5: eine perspektivische Ansicht des Presskegels gemäß Figur 2 von unten;
- Figur 6: eine perspektivische Ansicht des oberen Siebes gemäß Figur 2 mit einem angesetzten unteren Sieb;
- Figur 7: eine perspektivische Ansicht des oberen Siebes gemäß Figur 2 von unten;
- Figur 8: eine perspektivische Ansicht des unteren Siebes gemäß Figur 6 von oben;
- Figur 9: eine perspektivische Ansicht der Saftpresse gemäß Figur 1;
- Figur 10: eine perspektivische Teilansicht eines Griffes an der Saftpresse gemäß Figur 9;
- Figur 11: eine perspektivische Teilansicht einer Ringnut mit Rastnase an der Saftpresse gemäß Figur 9;

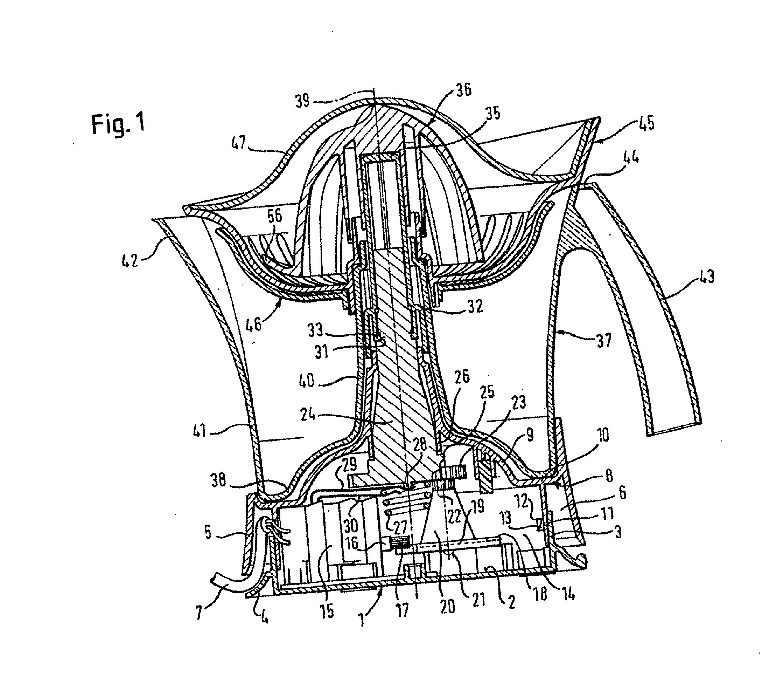

Die in Figur 1 im Schnitt dargestellte Saftpresse weist einen becherförmigen Gehäuseboden 1 mit einer kreisscheibenförmigen Bodenfläche 2 und einer um den Rand der Bodenfläche 2 umlaufenden zylindrischen Seitenwand 3 auf. An der Seitenwand 3 ist ein rinnenförmiger, um den Gehäuseboden 1 umlaufender, radial von der Seitenwand nach außen gerichteter, im Querschnitt bogenförmiger Tragrand 4 angeformt. Der Tragrand 4 begrenzt zusammen mit einer Schürze 5 eine Ringnut 6 zur Aufnahme eines elektrischen Anschlusskabels 7. Die Schürze 5 wird durch einen an einer domförmigen Abdeckung 8 angeformten Wandabschnitt gebildet. Die Abdeckung 8 weist eine kuppelartige Dachfläche 9 auf, an deren horizontal verlaufenden Randabschnitt 10 sich der die Schürze 5 bildende Wandabschnitt anschließt. Dieser Wandabschnitt ist im wesentlichen vertikal verlaufend angeordnet und weist eine leicht kegelig ausgebildete Mantelfläche auf. Unterhalb des kreisringförmigen Randabschnitts 10 erstreckt sich senkrecht nach unten eine zur umlaufenden zylindrischen Seitenwand 3 korrespondierende umlaufende zylindrische Seitenwand 11. Die Seitenwände 3 und 11 sind koaxial zueinander ausgerichtet und überlappen in ihren Randbereichen. An der Seitenwand 11 sind eine Vielzahl von über den Umfang gleichmäßig verteilter Aussparungen 12 vorgesehen, in die zugeordnete, radial nach innen gerichtete Rastzapfen 13 an der Seitenwand 3 des Gehäusebodens 1 eingreifen. Aufgrund der Aussparungen 12 und den eingreifenden Rastzapfen 13 können Gehäuseboden 1 und Abdeckung 8 ohne Verwendung zusätzlicher gesonderter Verbindungsmittel verbunden werden. Gehäuseboden 1 und Abdeckung 8 begrenzen einen Hohlraum 14 zur Aufnahme eines Antriebs.

Der Antrieb umfasst einen an das Anschlußkabel 7 elektrisch kontaktierten Motor 15, der eine Motorwelle 16 aufweist, an der ein Abtriebsritzel 17 sitzt. Das Motorwellenritzel 17 kämmt mit einem axialen Antriebszahnprofil 18, welches auf einem Tellerrad 19 sitzt. Das Tellerrad 19 ist einstückig mit einer kegelstumpfförmigen Getriebewelle 20 ausgebildet. Die Getriebewelle 20 sitzt mit seinem einen axialen Ende auf einem an der Bodenfläche 2 des Gehäusebodens 1 angeformten Nadelsitz 21 drehbar auf. An dem axial gegenüberliegenden anderen Ende der Getriebewelle 20 ist ein Abtriebsritzel 22 angeformt. Das Abtriebsritzel 22 kämmt stirnseitig mit einer Stirnverzahnung 23, die an einem unteren Ende einer Werkzeugwelle 24 vorgesehen ist.

Die Werkzeugwelle 24 weist einen radialen Absatz 25 auf, der in axialer Richtung an einen an der Abdeckung 8 angeformten Ringbund 26 mittels einer Federwendel 27 axial vorgespannt axial verschieblich gelagert ist. Die Federwendel 27 stütz sich einerseits an der Bodenfläche 2 des Gehäusebodens 1 und andererseits an der unteren Stirnseite der Werkzeugwelle 24 ab. Mittels der Federwendel 27 ist die Werkzeugwelle 24 in axialer Richtung nach oben vorgespannt. Wird die Werkzeugwelle 24 in axialer Richtung nach unten gedrückt, so drückt eine an der unteren Stirnseite der Werkzeugwelle 24 angeformte Schaltnase 28 auf eine obere Schaltzunge 29. Wenn die obere Schaltzunge 29 elektrisch mit einer unteren Schaltzunge 30 kontaktiert, wird die Stromzufuhr vom Anschlußkabel 7 zum Motor 15 geschlossen. Wird der axial nach unten gerichtete Druck von der Werkzeugwelle 24 wieder weggenommen, so kehrt die Werkzeugwelle aufgrund der gespannten Federwendel 27 wieder in ihre Ausgangslage, in welcher der Absatz 25 an dem Ringbund 26 ansteht zurück, so federt die obere Schaltzunge 29 wieder in ihre Ursprungslage zurück und die Verbindung zu der unteren Schaltzunge 30 ist aufgehoben und die Stromzufuhr von dem Anschlußkabel 7 zu dem Motor 15 unterbrochen. In einer mittleren Höhe weist die Werkzeugwelle 24 eine Radialnut 31 auf, an der ein Kupplungszapfen 32 aufschnappbar ist. Der Kupplungszapfen weist dazu mehrere über den Umfang gleichmäßig verteilter, radial nach innen gerichtete Schnappnasen 33 auf, die in die Radialnut 31 eingreifen. Zur Abdichtung eines Spaltes zwischen Werkzeugwelle 24 und Kupplungszapfen 32 ist eine mantelartig um den Spalt verlaufende Spritzschutzwand 34 am Kupplungszapfen 32 angeformt. An einem oberen freien Ende weist der Kupplungszapfen 32 ein Sechskantprofil 35 auf, auf den ein Presskegel 36 drehfest aber axial abziehbar aufgesteckt ist.

Um die Werkzeugwelle 24 herum ist ein topfförmiger Auffangbehälter 37 angeordnet. Der Auffangbehälter 37 weist einen der Dachfläche 9 der Abdeckung 8 angepassten Behälterboden 38 auf. Zentral aus dem Behälterboden 38 erstreckt sich koaxial zu einer Achse 39 der Werkzeugwelle 24 eine rohrförmige Behälterhülse 40, die in einer eingesetzten Position des Auffangbehälters 37 von der Werkzeugwelle 24 bzw. von dem Kupplungszapfen 32 durchdrungen wird. An einem äußeren Randabschnitt des Behälterbodens 38 schließt sich eine über den Umfang verlaufende, sich nach oben erstreckende Behälterwand 41 an. An der Behälterwand 41 ist eine Ausgießschnaupe 42 für ausgepressten Saft angeformt. An einer der Ausgießschnaupe 42 gegenüberliegenden Seite der Behälterwand 41 ist ein hohler, nach unten hin offen ausgebildeter Griff 43 angeformt. Der Griff 43 erstreckt sich von einem oberen Rand 44 des Auffangbehälters 37 bogenförmig nach unten bis kurz vor das untere Ende des Auffangbehälters 37.

Auf den oberen Rand 44 ist ein oberer Siebkörper 45 auf den Auffangbehälter 37 aufgesetzt. Unterhalb des Siebkörpers 45 ist ein unterer Siebkörper 46 gelagert. Oberhalb der Siebkörper 45 und 46 ist der Presskegel 36 drehfest auf das Sechskantprofil 35 des Kupplungszapfens 32 aufgesetzt. Den oberen Abschluß der Saftpresse bildet ein Deckel 47, der auf dem oberen Siebköper 45 aufliegt und den Presskegel 36 vollständig verdeckt. Der Deckel 47 ist zur Anpassung an die Kontur des Presskegels 36 leicht nach außen gewölbt geformt. Der Presskegel 36, der oberer Siebkörper 45, sowie der untere Siebkörper 46 sind in den folgenden Figuren näher erläutert.

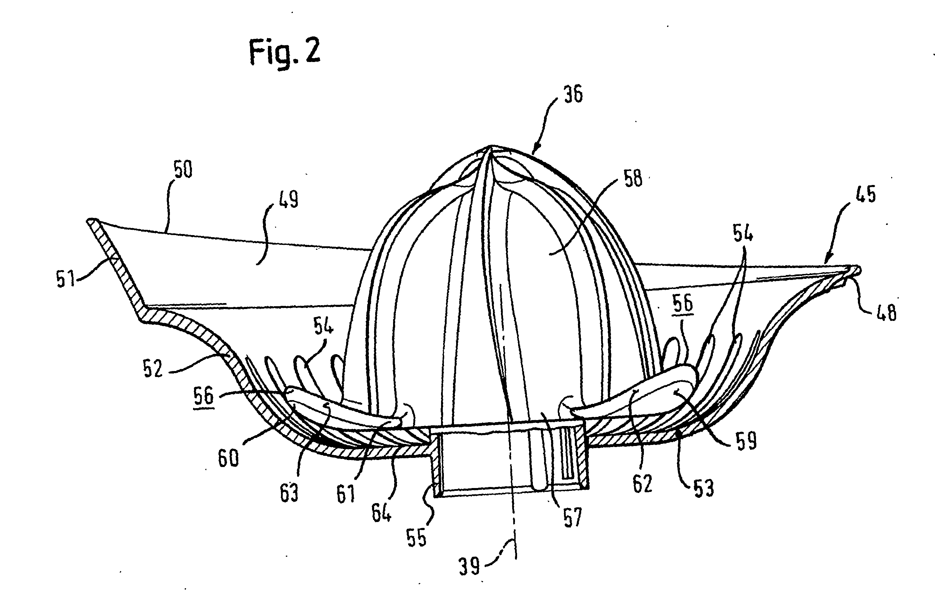

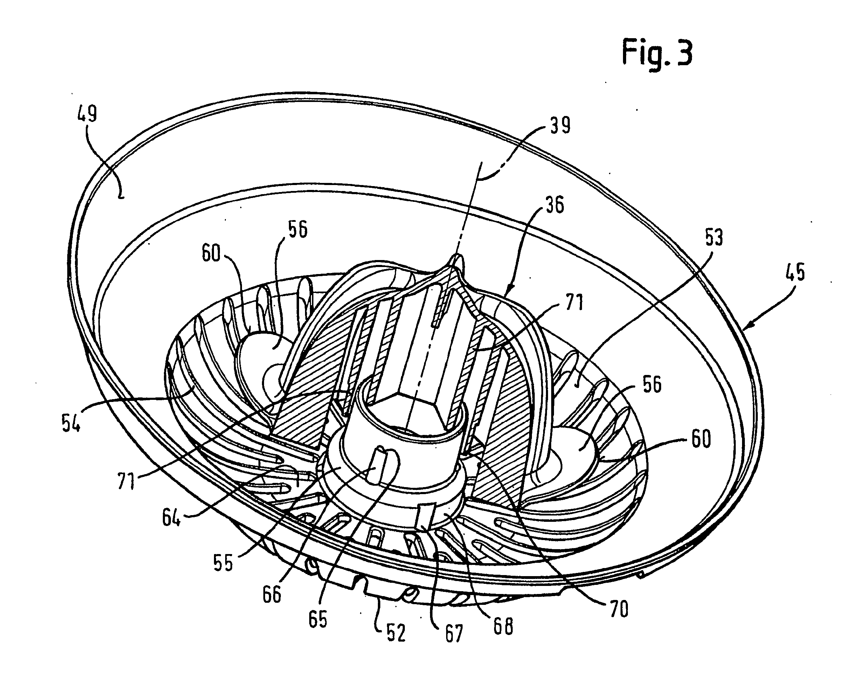

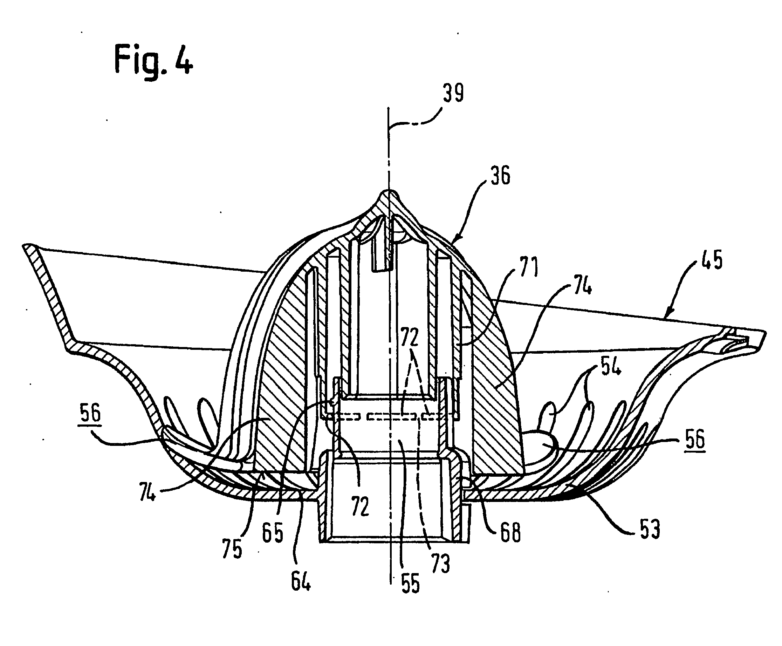

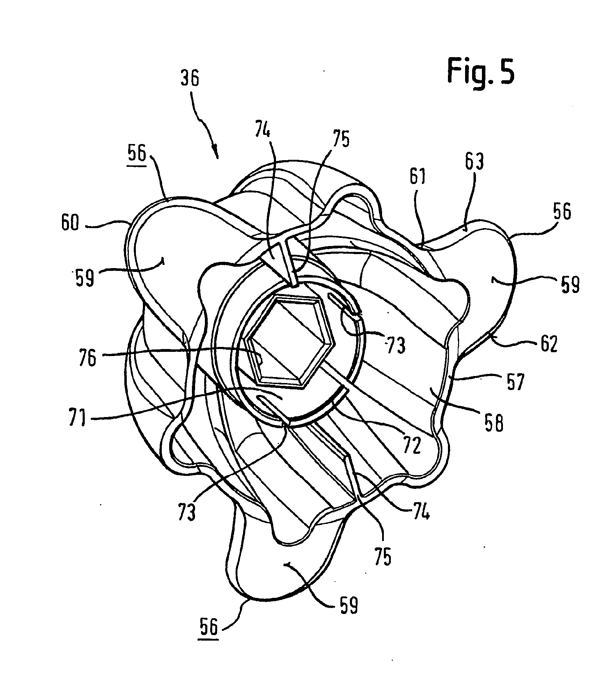

In Figur 2 ist der obere Siebkörper 45 geschnitten dargestellt und der Presskegel 36 in Seitenansicht gezeigt. Der Siebkörper 45 weist eine schüsselartige Form auf. Oberhalb eines kreisringförmigen Schüsselrandes 48 ist eine kegelförmig sich nach oben öffnende Mantelwand 49 angeformt. Ein oberer Rand 50 der Mantelwand 49 ist gegenüber der horizontalen schräg gekippt verlaufend ausgebildet, so dass die Mantelwand 49 in Figur 2 rechts dargestellt ihre geringste Höhe und in Figur 2 links dargestellt ihre größte Höhe aufweist. Der Bereich der Mantelwand 49 mit der größten Höhe bildet dabei einen Griffbereich 51, mit dem der obere Siebkörper 45 gegriffen werden kann. Eine Siebbodenfläche 52 schließt sich unterhalb des Schüsselrandes 48 an. Die Siebbodenfläche 52 ist schalenartig nach unten gewölbt. In der Siebbodenfläche 52 ist eine Siebfläche 53 ausgebildet. Die Siebfläche 53 wird durch eine Vielzahl von radial verlaufenden Schlitzen 54 gebildet. Die Schlitze 54 erstrecken sich radial von einer innerhalb des von der Grundrissfläche des Presskegels 36 überdeckten Siebfläche 53 ausgehend, nach außen hin entlang eines um einen Radius gekrümmten Flächenbereichs der Siebbodenfläche 52 bis zu einem oberen Ende hin. Unterhalb des Presskegels 36 ist in der Mittel der Siebbodenfläche 52 ein sich nach oben und unten aus der Ebene der Siebbodenfläche 52 herausragender, koaxial zur Achse 39 verlaufender Rohrabschnitt 55 an die Siebbodenfläche 52 angeformt. Der Rohrabschnitt 55 ist in den folgenden Figuren 3 und 4 näher erläutert. Der Presskegel 36 weist drei gleichmäßig über den Umfang verteilte Tresterfinger 56 auf. Jeder Tresterfinger 56 ist im Bereich des unteren Endabschnitts 57 einer Kegelwand 58 des Presskegels 36 angeformt und ragt in radialer Richtung nach außen von der Kegelwand 58 weg. Der gesamte nach außen ragende Tresterfinger 56 ist schnabel- bzw. löffelartig nach oben gebogen geformt. Eine der Siebfläche 53 zugewandte Seitenfläche 59 des Tresterfingers 56 ist gegenüber der Siebfläche 53 in einem Winkel angestellt. Aufgrund der schnabel- bzw. löffelartigen Form verläuft die Seitenfläche 59 derart, dass im Bereich des radial freien Endabschnitts 60 des Tresterfingers 56 die Seitenfläche 59 einen größeren Abstand zur Siebfläche 53 aufweist, als in einem Bereich des Tresterfingers 56, der in der Nähe eines Wurzelbereiches 61 des Tresterfingers 56 liegt, wo er an die Kegelwand 58 des Presskegels 36 angeformt ist. Im Ausführungsbeispiel ist die Saftpresse für Links- und Rechtslauf ausgebildet, so dass der Tresterfinger 56 an seinen in Umfangsrichtung in Drehrichtung und entgegen der Drehrichtung des Presskegels 36 weisenden Rändern 62 und 63 schnabel- oder löffelartig nach oben gebogen verlaufend ausgebildet ist. Die Ausbildung der Tresterfinger 56 ist auch in Figur 5 deutlich gezeigt.

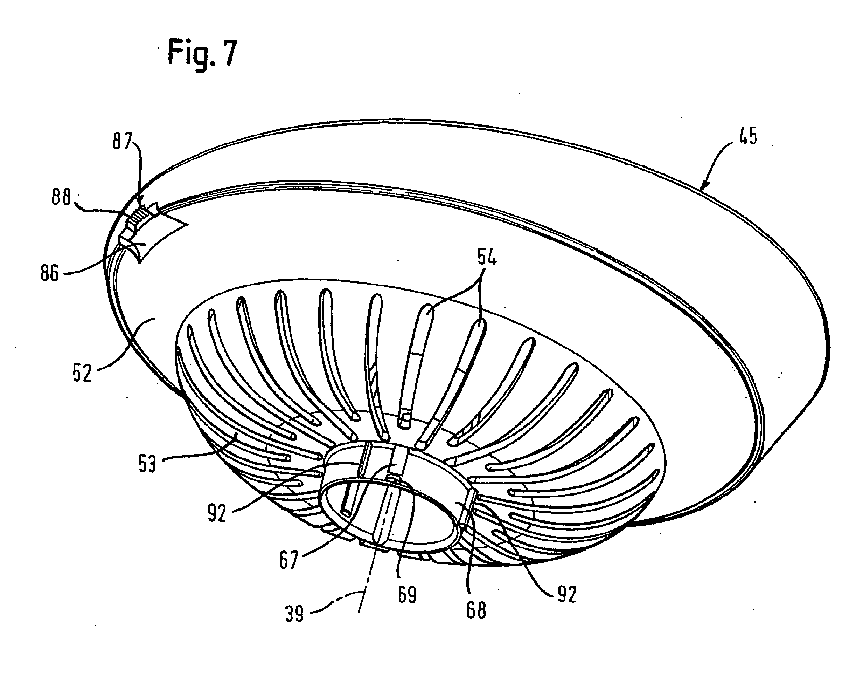

In Figur 3 ist der Presskegel 36 im Schnitt dargestellt und der obere Siebkörper 45 in perspektivischer Ansicht gezeigt. Der obere Siebkörper 45 weist einen saftdurchlässigen Bereich 64 auf, der in einem inneren Bereich der schalenartig gewölbten Siebbodenfläche 52 beginnend sich bis über die radial freien Endabschnitte 60 nach außen hin in der Siebbodenfläche 52 erstrecken. Der saftdurchlässige Bereich 64 der Siebfläche 53 erstreckt sich dadurch über die gesamte der von den Tresterfingern 36 überstrichenen Fläche. Der saftdurchlässige Bereich 64 wird von einer Vielzahl der sich radial in der Siebfläche 53 erstreckenden Schlitzen 54 gebildet. Jeweils jeder zweite Schlitz 54 endet im radialen Zentrum der Siebbodenfläche 52 unterhalb des Presskegels 36 kurz vor Erreichen des Rohrabschnitts 55. Die weiteren Schlitze 54 sind kürzer ausgebildet und enden bereits deutlich vor Erreichen des Rohrabschnitts 55. Sämtliche Schlitze 54 weisen die gleiche Schlitzbreite auf. Der Rohrabschnitt 55 ist koaxial zur Kegelachse 39 angeordnet und erstreckt sich etwa um die halbe Höhe des Presskegels 36 nach oben. Am Rohrabschnitt 55 ist im Vordergrund der Figur 3 ein Gegenrastelement 65 gezeigt. Der Rohrabschnitt 55 trägt insgesamt drei gleichmäßig über den Umfang verteilte Gegenrastelemente 65, die vom Rohrabschnitt 65 ausgehend radial nach außen vorspringen und knopfartig angeformt sind. Unterhalb jedem knopfartigen Gegenrastelement 65 ist eine obere Entformausnehmung 66 am Rohrabschnitt 55 ausgebildet, damit der Siebkörper in einem zweiteiligen Werkzeug im Kunststoffspritzgussverfahren hergestellt werden kann. Die oberen Entformausnehmungen 66 sind nötig, um die Gegenrastelemente 65 entformen zu können, die in einer außerhalb der Trennebene des Spritzgusswerkzeugs liegenden Ebene am Rohrabschnitt 55 angeordnet sind. Der Rohrabschnitt 55 weist am Übergangsbereich zur oberen Siebfläche 53 einen im Durchmesser vergrößerten Abschnitt 68 auf an dem eine zur oberen Entformausnehmung 66 analoge untere Entformausnehmung 67 angeformt ist. Die untere Entformausnehmung 67 ist zur Herstellung von in Figur 7 gezeigten unteren Gegenrastelementen 69 zur Halterung des unteren Siebkörpers 46 vorgesehen. Die oberen Gegenrastelemente 65 halten den Presskegel 36 mittel mindesten eines Rastelements 70, das an einem am Presskegel 36 angeformten Rohrstück 71 ihrerseits radial nach innen ragend angeformt sind. Das mindestens eine Rastelement 70 erstreckt sich in Form eines Ringwulstes 72, wie in Figur 4 gezeigt.

Figur 4 zeigt wie die oberen Gegenrastelemente 65 radial nach außen abstehend an den Rohrabschnitt 55 angeformt sind. In der in Figur 4 gezeigten Position befindet sich der Presskegel 36 in einer am oberen Siebkörper 45 verrasteten Position. In der verrasteten Position kann der Presskegel zwar um seine Kegelachse 39 am oberen Siebkörper 45 sich drehen, er kann jedoch nur mit deutlichem Kraftaufwand in axialer Richtung nach oben von dem oberen Siebkörper 45 abgezogen werden. Dazu befindet sich in der gezeigte, verrasteten Position des Presskegels 36 die Ringwulst 72 axial unterhalb der Gegenrastelemente 65. Die Ringwulst 72 ist am unteren Ende des Rohrstücks 71 radial nach innen ausbauchend angeformt. Die Ringwulst 72 weist eine Vielzahl von Einkerbungen 73 auf, die eine gewisse Elastizität erzeugen, damit der Presskegel mit definiertem Kraftaufwand in axialer Richtung von dem oberen Siebkörper 45 abgezogen werden kann, wenn dies gewünscht ist. In der in Figur 4 gezeigten Schnittansicht des Presskegels 36 sind zwei diametral gegenüberliegende Passierelemente 74 im inneren Hohlraum des Presskegels angeformt. Die Passierelemente 74 erstrecken sich in vertikaler Richtung über die gesamte Höhe des Presskegels 36 und ragen in radialer Richtung zur Kegelachse 39 hin nach innen vor. Eine kurze Stirnkante 75 des Passierelements 74 ist dem saftdurchlässigen Bereich der Siebfläche 53 zugewandt, die sich unter der Grundrissfläche des Presskegels 36 befindet. Die Passierelemente 74 sind insbesondere in Figur 5 deutlicher gezeigt.

In Figur 5 ist die Kegelwand 58 des Presskegels 36 von innen gezeigt. An der Innenseite der Kegelwand 58 sind zwei diametral gegenüberliegende Passierelemente 74 radial nach innen abstehend angeformt. Die Passierelemente erstrecken sich bis zum unteren Ende der Kegelwand 58 und weisen dort die Stirnkanten 75 auf. Die Stirnkanten 75 sind scharfkantig ausgebildet und erstrecken sich radial nach innen bis nahe an den Durchmesser des Rohrstücks 71 heran. Am unteren Ende des Rohrstücks 71 ist die Ringwulst 72 nach innen ragend angeformt. Das Rohrstück 71 weist die mehreren über den Umfang gleichmäßig verteilten Einkerbungen 73 auf, die dazu dienen, die Ringwulst 72 an mehreren Stellen zu unterbrechen, um eine gewisse Elastizität in die Ringwulst zu bringen. Koaxial zum Rohrstück 71 ist innerhalb des Rohrstücks 71 ein Innensechskant 76 am Presskegel 36 angeformt, in den das Sechskantprofil 35 der Werkzeugwelle 24 zur Übertragung eines vom Motor 15 erzeugten Drehmoments auf den Presskegel 36 einsetzbar ist (Figur1).

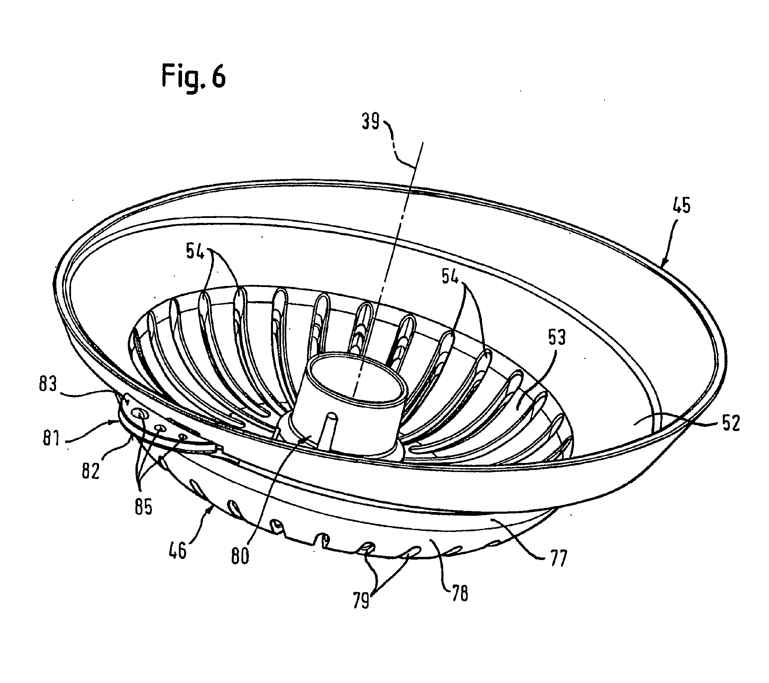

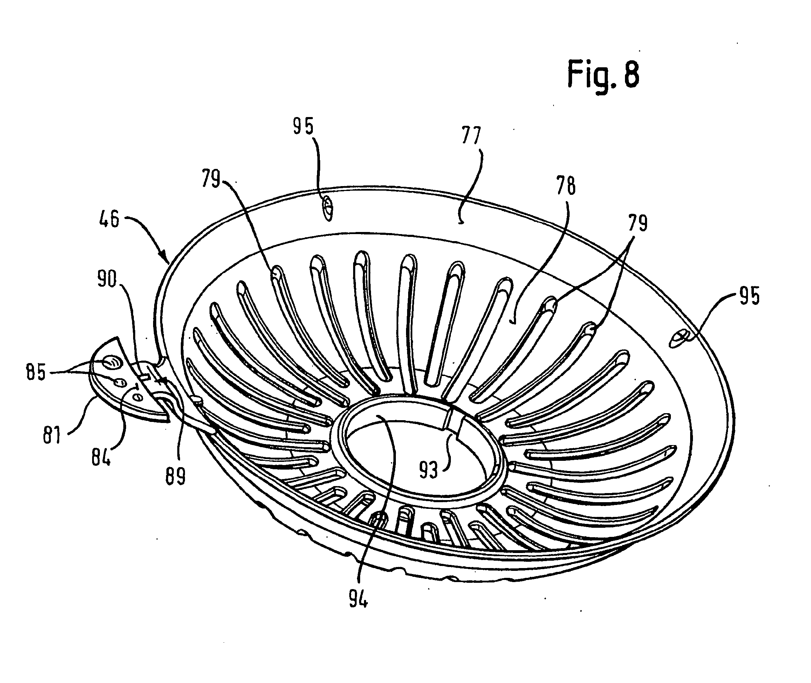

In Figur 6 ist der obere Siebkörper 45 und der untere Siebkörper 46 in zusammengebautem Zustand gezeigt. Analog zum oberen Siebkörper 45 weist auch der untere Siebköper 46 eine Siebbodenfläche 77, eine Siebfläche 78 und darin in radialer Richtung verlaufende Schlitze 79 auf. Die Schlitze 79 sind im unteren Siebkörper 46 derart verlaufend angebracht, dass sie bei deckungsgleicher Lage von unterem Siebkörper 46 und oberem Siebkörper 45 mit den Schlitzen 54 in dem oberen Siebkörper 45 fluchten. Der untere Siebkörper 46 ist mittels eines Drehlagers 80 um die Kegelachse 39 drehbar am oberen Siebkörper 45 gehalten. Die Ausbildung des Drehlagers 80 ist in den Figuren 7 und 8 im Detail dargestellt. Am unteren Siebkörper 46 ist des weiteren ein Griffabschnitt 81 vorgesehen. Der Griffabschnitt 81 ist am äußeren Umfang des unteren Siebkörpers 46 radial nach außen abstehend angeformt. Der Griffabschnitt 81 ist halbkreisförmig ausgebildet und weist eine untere Seitenwand 82 auf, die sich auf dem oberen Rand 44 des Auffangbehälters 37 (Figur 1) abzustützen vermag. Der Griffabschnitt 81 weist des weiteren eine obere Seitenwand 83 auf, die eine Betätigungsfläche 84 bildet. Auf der Betätigungsfläche 84 ist eine Oberflächenstruktur in Form dreier vorspringender linsenartiger Erhebungen 85 aufgebracht. Die drei linsenartigen Erhebungen 84 bilden sowohl eine optische als auch eine haptische Markierung für die Drehrichtung des unteren Siebkörpers 46 bezogen auf den oberen Siebkörper 45. Zur Wirkung als Drehrichtungsmarkierung ist die in Figur 6 links angeordnete Erhebung 84 im Durchmesser und in Höhe am größten ausgebildet, wo hingegen die in Figur 6 rechts dargestellte Erhebung 84 den kleinsten Durchmesser und die kleinste Höhe aufweist. Dazwischen liegend ist eine Erhebung 85 angeordnet, die einen mittleren Durchmesser und eine mittlere Höhe aufweist. Wird das untere Sieb 46 in Richtung der größten Erhebung 85, gemäß Figur 6 also im Uhrzeigersinn bewegt, so fluchten die Schlitze 79 des unteren Siebkörpers 46 mit den Schlitzen 54 im oberen Siebkörper 45, so dass ein größter Öffnungsquerschnitt für durchtretenden Saft geschaffen ist. Wird das untere Sieb in Richtung der kleinsten Erhebung 85, gemäß Figur 6 also entgegen dem Uhrzeigersinn bewegt, so liegen die Schlitze 79 des unteren Siebkörpers 46 weitgehend verschoben zu den Schlitzen 54 im oberen Siebkörper 45, so dass der kleinste Öffnungsquerschnitt für durchtretenden Saft geschaffen ist.

Wie in Figur 7 gezeigt trägt der obere Siebkörper 45 im Bereich des Umfangsrandes der Siebbodenfläche 52 eine Aussparung 86, die ein dem unteren Siebkörper 46 zugewandtes Gegenrastmittel 87 in Form von einer Anzahl von keilförmigen Zähnen ein Zahnprofil 88 bildet. Ein am unteren Siebkörper 46 vorgesehenes zum Gegenrastmittel 87 korrespondierendes, in Figur 8 dargestelltes Rastmittel 89 weist einen Rastzahn 90 auf, der in das Zahnprofil 88 eingreift. Der obere Siebkörper 45 trägt in seinem Zentrum koaxial zur Kegelache39 angeordnet den Rohrabschnitt 55. Der Rohrabschnitt 55 weist am Übergangsbereich zur oberen Siebfläche 53 einen im Durchmesser vergrößerten Abschnitt 68 auf an dem eine zur oberen Entformausnehmung 66 analoge untere Entformausnehmung 67 angeformt ist. Der im Durchmesser vergrößerte Abschnitt 68 bildet einen Tragzapfen 91 für den unteren Siebkörper 46. Die untere Entformausnehmung 67 ist zur Herstellung von den unteren Gegenrastelementen 69 zur Halterung des unteren Siebkörpers 46 am oberen Siebkörper 45 vorgesehen. Um das untere Sieb 46 über einen begrenzten Drehwinkel am oberen Siebkörper 45 zu lagern sind am oberen Siebkörper 45 zwei den Drehwinkel begrenzende radiale Gegenanschlagelemente 92 am Tragzapfen 91 angeformt.

Die radialen Gegenanschlagelemente 92 des oberen Siebkörpers 45 greifen in je ein in Figur 8 näher gezeigtes Anschlagelement 93 am unteren Siebkörper 46 ein. Die Anschlagelemente 93 sind als radial innere Aussparungen eines Ringbundes 94 des unteren Siebkörpers 46 ausgebildet. Die zwei um einen Winkel versetzten stegförmigen Gegenanschlagelemente 92 bildet mit den beiden axialnutartigen Anschlagelementen 93 nicht nur die Winkelbegrenzung für das Verdrehen unterem Siebkörper 46 bezüglich des oberen Siebkörpers 45, sondern bilden gleichzeitig eine Sitzkontrolle, da der untere Siebkörper nur in einer einzigen Winkelposition gegenüber dem oberen Siebkörper 45 an diesem befestigt werden kann. Zur Wahrung eines gleichmäßigen Abstandes von unterem Siebkörper 46 gegenüber dem oberen Siebkörper 45 sind vier gleichmäßig über den Umfang verteilte Abstandshalter 95 an einer dem oberen Siebkörper 45 zugewandten Seitenfläche der unteren Siebbodenfläche 77 angeformt. Die Abstandshalter 95 sind als noppenartige Erhebungen ausgebildet, die sich von der Oberseite der unteren Siebbodenfläche 77 erheben.

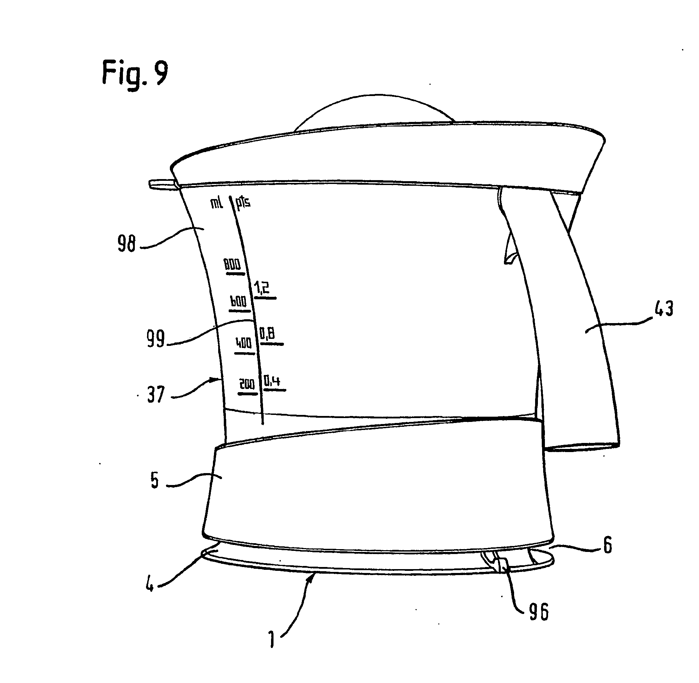

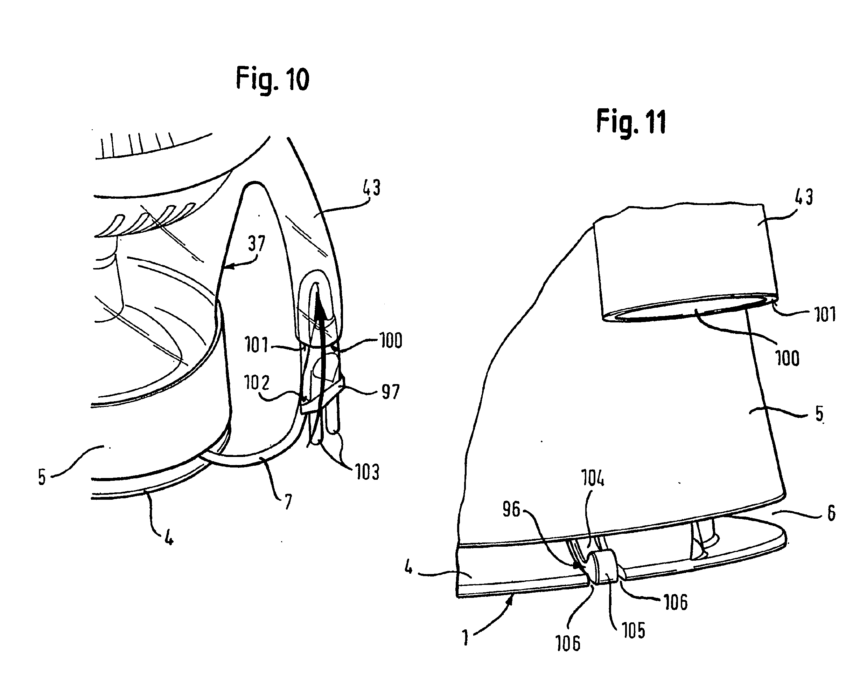

In Figur 9 ist die Saftpresse gemäß Figur 1 in perspektivischer Ansicht von der Seite gezeigt. Der Gehäuseboden 1 ist über den Umfang mit der Schürze 5 umgeben. Oberhalb der Schürze 5 ist der Auffangbehälter 37 aufgesetzt. Der Auffangbehälter 37 weist eine transparente Behälterwand 98 auf, an der eine Hohlmaßskala 99 eingeprägt ist. Am Gehäuseboden 1 ist der umlaufende Tragrand 4 angeformt. Der Tragrand 4 und die Schürze 5 begrenzen die Ringnut 6. In die Ringnut 6 ist das Anschlusskabel 7 aufwickelbar. Um zu Verhindern, dass das Anschlusskabel 7 sich von dem in der Ringnut 6 getragenen Kabelwickel ungewollt löst, ist am Tragrand 4 eine federelastische Rastnase 96 angeformt. Die federelastische Rastnase 96 ist in Figur 11 in einem vergrößerten Ausschnitt gezeigt. Die Funktion des hohlen Griffes 43 als Aufnahme für einen Netzstecker 97 ist in Figur 10 dargestellt.

Figur 10 zeigt wie der Netzstecker 97 in den hohlen Griff 43 in Pfeilrichtung eingesetzt wird. Das elektrische Anschlusskabel 7 wird zu einer Schlaufe gebogen und der Netzstecker 97 rückseitig mit der Schlaufe voraus über eine Öffnung 100 im hohlen Griff 43 eingeführt. Die Querschnittskontur der Öffnung 100 bzw. des hohlen Griffes 43 ist wie in Figur 11 angedeutet der Kontur des Netzstecker 97 angepasst. Der Netzstecker 97 kann in den hohler Griff 43 eingeschoben werden, bis ein als Randabsatz am Netzstecker 97 ausgebildetes Anschlagelement 102 am stirnseitigen Randabschnitt 101 des hohlen Griffes 43 ansteht. In dieser Endposition des Netzsteckers 97 im hohlen Griff 43 stehen zwei elektrische Kontaktstifte 103 weiterhin nach außen vor, so dass der Netzstecker 97 an den zwei elektrischen Kontaktstiften 103 angefasst und aus dem hoheln Griff 43 wieder herausgezogen werden kann.

Die in Figur 11 vergrößert dargestellte federelastische Rastnase 96 ist an den Tragrand 4 direkt angeformt. Die federelastische Rastnase 96 weist einen Stegabschnitt 104 auf, der an seinem einen Ende mit dem Tragrand 4 verbunden ist. An seinem anderen, dem freien Ende weist der Stegabschnitt 104 eine widerhakenartige Verdickung 105 auf, die den freien Spalt der Ringnut 6 verengt. Dazu ragt die Verdickung 105 etwa bis zur Mittel über die Ringnut 6 hinweg. In einem mittleren Bereich ist der Stegabschnitt 104 entsprechend der Form des Tragrandes 4, wie in Figur 1 im Querschnitt gezeigt, rinnenartig gebogen geformt. Die rinnenartig gebogene Form ist dem Querschnitt des elektrischen Anschlusskabels 7 angepasst. Der Stegabschnitt 104 bzw. die Verdickung 105 wird seitlich von zwei Aussparungen 106 begrenzt, die ein freies elastisches Ausweichen der federelastischen Rastnase 96 im Tragrand 4 ermöglichen.

## Patentansprüche

1. Saftpresse insbesondere zum Entsaften von Zitrusfrüchten, mit einem um seine Kegelachse (39) drehbaren Presskegel (36), der mindestens einen Tresterfinger (56) zum Überstreichen eines saftdurchlässigen Bereiches (64) einer Siebfläche (53) aufweist, unter der ein Auffangbehälter (37) für ausgepressten Saft angeordnet ist, wobei der mindestens eine Tresterfinger (56) eine der Siebfläche (53) zugewandte Seitenfläche (59) aufweist, die gegenüber der Siebfläche (53) in einem Winkel angestellt ist, **dadurch gekennzeichnet, dass** die der Siebfläche (53) zugewandte Seitenfläche (59) des Tresterfingers (56) in Drehrichtung des Presskegels (36) gegenüber der Siebfläche (53) ansteigt.

2. Saftpresse nach Anspruch 1, **dadurch gekennzeichnet, dass** die der Siebfläche (53) zugewandte Seitenfläche (59) des Tresterfingers (56) in radialer Richtung gegenüber der Siebfläche (53) nach außen ansteigt.

3. Saftpresse nach Anspruch 1 oder 2, **dadurch gekennzeichnet, dass** die der Siebfläche (53) zugewandte Seitenfläche (59) des Tresterfingers (56) einen nach außen gewölbten Flächenabschnitt aufweist.

4. Saftpresse nach einem der Ansprüche 1 bis 3, **dadurch gekennzeichnet, dass** der mindestens eine Tresterfinger (56) einen von der Siebfläche (53) weggebogenen Randabschnitt (62, 63) aufweist.

5. Saftpresse nach Anspruch 4, **dadurch gekennzeichnet, dass** der weggebogene Randabschnitt (62, 63) in Drehrichtung des Presskegels (36) einem der Siebfläche (53) zugewandten Flächenabschnitt (59) des Tresterfingers (56) vorgelagert ist.

6. Saftpresse nach Anspruch 4 oder 5, **dadurch gekennzeichnet, dass** der weggebogene Randabschnitt (62, 63) durch einen radial freien Endabschnitt (60) des Tresterfingers (56) gebildet wird.

7. Saftpresse nach einem der Ansprüche 1 bis 6, **dadurch gekennzeichnet, dass** die Siebfläche (53) zumindest in dem von dem mindestens einen Tresterfinger (56) überstrichenen, saftdurchlässigen Bereich (64) radial nach außen ansteigend ausgebildet ist.

8. Saftpresse nach Anspruch 7, **dadurch gekennzeichnet, dass** der nach außen ansteigende saftdurchlässige Bereich (64) der Siebfläche (53) schalenartig gewölbt ist.

9. Saftpresse nach Anspruch 8, **dadurch gekennzeichnet, dass** der schalenartig gewölbte saftdurchlässige Bereich (64) der Siebfläche (53) parallel beabstandet zu dem nach außen gewölbten Flächenabschnitt des mindestens eine Tresterfingers (56) verlaufend ausgebildet ist.

10. Saftpresse nach einem der Ansprüche 7 bis 9, **dadurch gekennzeichnet, dass** der nach außen ansteigende saftdurchlässige Bereich (64) der Siebfläche (53) sich radial mindestens über die von dem mindestens einen Tresterfinger (56) überstrichene Fläche erstreckt.

11. Saftpresse nach einem der Ansprüche 7 bis 10, **dadurch gekennzeichnet, dass** der saftdurchlässige Bereich (64) durch eine Vielzahl von in der Siebfläche (53) sich radial erstreckenden Schlitzen (54) gebildet wird.

12. Saftpresse nach Anspruch 11, **dadurch gekennzeichnet, dass** die Schlitze (54) von einer innerhalb des von der Grundrissfläche des Presskegels (36) überdeckten Siebfläche (53) ausgehend sich nach außen hin mindestens bis zu einem radialen Ende des mindestens einen Tresterfingers (56) erstreckend angeordnet sind.

## Claims

1. Juice press particularly for juice extraction from citrus fruits, with a press cone (36), which is rotatable about its cone axis (39) and which comprises at least one pulp finger (56) for wiping over a juice-permeable region (64) of a sieve surface (53), under which a collecting container (37) for expressed juice is arranged, wherein the at least one pulp finger (56) has a side surface (59) which faces the sieve surface (53) and is set at an angle relative to the sieve surface (53), **characterised in that** the side surface (59), which faces the sieve surface (53), of the pulp finger (56) rises in rotational direction of the press cone (36) relative to the sieve surface (53).

2. Juice press according to claim 1, **characterised in that** the side surface (59), which faces the sieve surface (53), of the pulp finger (56) rises outwardly in radial direction relative to the sieve surface (53).

3. Juice press according to claim 1 or 2, **characterised in that** the side surface (59), which faces the sieve surface (53), of the pulp finger (56) has an outwardly curved area section.

4. Juice press according to one of claims 1 to 3, **characterised in that** the at least one pulp finger (56) has an edge section (62, 63) bent away from the sieve surface (53).

5. Juice press according to claim 4, **characterised in that** the bent-away edge section (62, 63) is mounted upstream, in rotational direction of the press cone (36), of an area section (59), which faces the sieve surface (53), of the pulp finger (56).

6. Juice press according to claim 4 or 5, **characterised in that** the bent-away edge section (62, 63) is formed by a radial free end section (60) of the pulp finger (56).

7. Juice press according to one of claims 1 to 6, **characterised in that** the sieve surface (53) is formed to rise radially outwardly at least in the juice-permeable region (64) wiped over by the at least one pulp finger (56).

8. Juice press according to claim 7, **characterised in that** the outwardly rising juice-permeable region (64) of the sieve surface (53) is curved in dish-like manner.

9. Juice press according to claim 8, **characterised in that** the juice-permeable region (64), which is curved in dish-like manner, of the sieve surface (53) is formed to extend parallelly at a spacing from the outwardly curved area section of the at least one pulp finger (56).

10. Juice press according to one of claims 7 to 9, **characterised in that** the outwardly rising juice-permeable region (64) of the sieve surface (53) extends at least over the area wiped by the at least one pulp finger (56).

11. Juice press according to one of claims 7 to 10, **characterised in that** the juice-permeable region (64) is formed by a plurality of slots (54) extending radially in the sieve surface (53).

12. Juice press according to claim 11, **characterised in that** the slots (54) are arranged to go out from a sieve surface within the sieve surface (53) covered by the plan area of the press cone (36) and to extend outwardly at least to a radial end of the at least one pulp finger (56).

## Revendications

1. Presse-fruits, en particulier pour extraire le jus d'agrumes, comprenant un cône de pressage (36) pouvant tourner autour de son axe de cône (39), qui présente au moins un doigt à pulpe (56) pour balayer une zone (64) perméable au jus d'une surface de tamis (53), sous laquelle est disposé un récipient collecteur (37) pour le jus expulsé, le au moins un doigt à pulpe (56) présentant une face latérale (59) tournée vers la face de tamis (53), qui est placée par rapport à la face de tamis (53) en formant un angle, **caractérisé en ce que** la face latérale (59), tournée vers la face de tamis (53), du doigt à pulpe (56) augmente dans le sens de rotation du cône de pressage (36) par rapport à la face de tamis (53).

2. Presse-fruits selon la revendication 1, **caractérisé en ce que** la face latérale (59), tournée vers la face de tamis (53), du doigt à pulpe (56) augmente dans le sens radial par rapport à la face de tamis (53) vers l'extérieur.

3. Presse-fruits selon la revendication 1 ou 2, **caractérisé en ce que** la face latérale (59), tournée vers la face de tamis (53), du doigt à pulpe (56) présente une partie de surface incurvée vers l'extérieur.

4. Presse-fruits selon l'une quelconque des revendications 1 à 3, **caractérisé en ce que** le au moins un doigt à pulpe (56) présente une partie de bordure (62, 63) courbée de façon à s'éloigner de la face de tamis (53).

5. Presse-fruits selon la revendication 4, **caractérisé en ce que** la partie de bordure (62, 63) courbée est placée, dans le sens d'orientation du cône de pressage (36) en amont d'une partie de surface (39), tournée vers la face de tamis (53), du doigt à pulpe (56).

6. Presse-fruits selon la revendication 4 ou 5, **caractérisé en ce que** la partie de bordure (62, 63) courbée est formée par une partie d'extrémité (60) radialement libre du doigt à pulpe (56).

7. Presse-fruits selon l'une quelconque des revendications 1 à 6, **caractérisé en ce que** la face de tamis (53) est réalisée au moins dans la plage (64) perméable au jus, balayée par le au moins un doigt à pulpe (56), en montant radialement vers l'extérieur.

8. Presse-fruits selon la revendication 7, **caractérisé en ce que** la zone (64), perméable au jus et montant vers l'extérieur, de la face de tamis (53) est incurvée en forme de coque.

9. Presse-fruits selon la revendication 8, **caractérisé en ce que** la zone (64), perméable au jus et formée en forme de coque, de la face de tamis (53) est agencée de façon à s'étendre parallèlement à distance de la partie de surface incurvée vers l'extérieur du au moins un doigt à pulpe (56).

10. Presse-fruits selon l'une quelconque des revendications 7 à 9, **caractérisé en ce que** la zone (64), perméable au jus et montant vers l'extérieur, de la face de tamis (53) s'étend radialement au moins sur la surface balayée par le au moins un doigt à pulpe (56).

11. Presse-fruits selon l'une quelconque des revendications 7 à 10, **caractérisé en ce que** la zone (64) perméable au jus est formée par une pluralité de fentes (54) s'étendant radialement dans la face de tamis (53).

12. Presse-fruits selon la revendication 11, **caractérisé en ce que** les fentes (54) sont disposées en partant d'une face de tamis (53) recouverte par la surface de projection horizontale du cône de pressage (36) et en s'étendant vers l'extérieur au moins jusqu'à une extrémité radiale du au moins un doigt à pulpe (56).
